# EUROPÄISCHE PATENTSCHRIFT

(11) **EP 1 529 088 B1**
(45) Veröffentlichungstag und Bekanntmachung des Hinweises auf die Patenterteilung: **29.08.2012**
(21) Anmeldenummer: 03784149.1
(22) Anmeldetag: 01.08.2003
(51) Int. Cl.: C09K 5/20, C23F 11/12

(54) **GLYKOLFREIE WÄSSRIGE GEFRIERSCHUTZMITTEL ENTHALTEND DICARBONSÄURESALZE**
GLYCOL-FREE AQUEOUS ANTI-FREEZE AGENT CONTAINING DICARBOXYLATE SALTS
ANTIGELS AQUEUX SANS GLYCOL CONTENANT DES SELS D'ACIDES DICARBOXYLIQUES

(30) Priorität: 02.08.2002 DE 10235477
(43) Veröffentlichungstag der Anmeldung: 11.05.2005
(60) Teilanmeldung: 11192804.0
(73) Patentinhaber: BASF SE, 67056 Ludwigshafen (DE)
(72) Erfinder: WENDEROTH, Bernd, 69488 Birkenau (DE); FERNANDEZ-GONZALEZ, Monica, 69121 Heidelberg (DE); DAMBACH, Stefan, 67454 Hassloch (DE); MACHETANZ, Ludwina, 67069 Ludwigshafen (DE); NITZSCHKE, Uwe, 67071 Ludwigshafen (DE)
(86) Internationale Anmeldenummer: PCT/EP2003/008561
(87) Internationale Veröffentlichungsnummer: WO 2004/015023

(56) Entgegenhaltungen:
- EP-A- 0 077 767
- EP-A- 1 170 347
- WO-A-01/05906
- GB-A- 1 004 259
- DATABASE WPI Section Ch, Week 199313 Derwent Publications Ltd., London, GB; Class E13, AN 1993-107768 XP002263542 & SU 1 726 489 A (URALS CHEM INST), 15. April 1992 (1992-04-15)

## Beschreibung

Die vorliegende Erfindung betrifft wässrige Gefrierschutzmittel auf Basis von Dicarbonsäuresalzen. Diese eignen sich zur Verwendung als Kühlerschutzmittel in Verbrennungsmotoren, beispielsweise in Kraftfahrzeugen, als Wärmeträgerflüssigkeiten, beispielsweise in Solaranlagen, oder als Kühlsolen, beispielsweise in stationären Kühlanlagen.

Gefrierschutzmittel für die Kühlkreisläufe von Verbrennungsmotoren von beispielsweise Automobilen enthalten meistens Alkylenglykole, hauptsächlich Ethylenglykol und/oder Propylenglykol, als Gefrierschutzkomponente. Neben weiteren Komponenten sind weiterhin vor allem Korrosionsinhibitoren enthalten.

Insbesondere in modernen Verbrennungsmotoren werden Temperaturbelastungen erreicht, die hohe Anforderungen an die verwendeten Materialien stellen. Jede Art und jegliches Ausmaß von Korrosion stellen dabei einen potentiellen Risikofaktor dar, der zur Verkürzung der Laufzeit des Motors und zur Erniedrigung der Zuverlässigkeit führen kann. Weiterhin werden in modernen Motoren zunehmend eine Vielzahl von unterschiedlichen Materialien verwendet, beispielsweise Gusseisen, Kupfer, Messing, Weichlot, Stahl sowie Magnesium- und Aluminiumlegierungen. Durch diese Vielzahl an metallischen Materialien entstehen zusätzlich potentielle Korrosionsprobleme, insbesondere an den Stellen, an denen verschiedene Metalle in Kontakt miteinander stehen. Es können insbesondere an diesen Stellen vergleichsweise leicht die unterschiedlichsten Korrosionsarten auftreten, beispielsweise Lochfraßkorrosion, Spaltkorrosion, Erosion oder Kavitation.

Der mit den bisher bekannten Mischungen erreichte Korrosionsschutz als auch die erzielbaren Gefrierpunkte sind im allgemeinen gut. Mischungen von Wasser mit Alkylenglykolen weisen jedoch eine schlechtere Wärmeleitfähigkeit als Wasser auf. Daher wird schon seit langem versucht, glykolfreie wässrige Kühlmittelformulierungen zu entwickeln, bei denen durch Zugabe von Salzen der Gefrierpunkt abgesenkt wird. Es existieren bereits zahlreiche Patente und Patentanmeldungen, die Lösungen für diese Problematik vorschlagen.

In der US 2,233,185 werden glykolfreie wässrige Kühlerschutzmittel beschrieben, die Natrium- und Kaliumsalze von sogenannten "Fettsäuren" mit nicht mehr als 9 Kohlenstoffatomen, beispielsweise Kaliumformiat, -acetat und/oder -propionat zur Absenkung des Gefrierpunkts enthalten.

Die EP-A 0 306 972 und dessen Äquivalent US 5,104,562 beschreiben teilweise oder vollständig glykolfreie, frostbeständige wässrige Kühlerschutzmittel, die Kaliumformiat und -acetat zur Gefrierpunktabsenkung enthalten.

Die DE-A 41 07 442 beschreibt glykolfreie wässrige Alkalisalzlösungen auf Basis von Acetat/Carbonat-Mischungen als Wärmeübertragungs- und Kühlmittel.

Die DE-A 195 10 012 offenbart wässrige Kühlflüssigkeiten auf Basis von Propionsäuresalzen.

Die WO 96/26990 beschreibt frostresistente Kühlmittel und Wärmeträgerflüssigkeiten, die neben Korrosionsinhibitoren als Hauptkomponenten Mischungen aus Kaliumacetat und -formiat enthalten.

Die EP-A 1 007 600 offenbart Kühlsolen auf Basis von Alkalimetallacetaten und/oder -formiaten, die neben den üblichen Korrosionsinhibitoren zusätzlich Alkalimetallsulfite enthalten.

In der WO 99/37733 werden glykolfreie wässrige Kühlflüssigkeiten mit Korrosionsinhibitoren beschrieben, die Alkalisalze von Essigsäure und/oder Ameisensäure als Gefrierschutzkomponente enthalten.

Die WO 01/94494 beschreibt wässrige Kühlflüssigkeiten mit verbesserten Wärmeübertragungseigenschaften auf Basis von Cäsiumformiat.

Die WO 01/05906 offenbart wässrige Formulierungen zur Verwendung als Kühlerschutzmittel und Wärmeträgerflüssigkeiten, enthaltend neben Korrosionsinhibitoren eine Mischung aus C₁-C₂-Carbonsäuresalzen, C₃-C₅-Carbonsäuresalzen und gegebenenfalls C₆-C₁₂-Carbonsäuresalzen. Die Verwendung von Dicarbonsäuresalzen ist nicht offenbart.

EP-A 0 077 767 beschreibt wässrige Gefrierschutz- und Eislösemittel, insbesondere zur Enteisung vereister Oberflächen von Straßen und Wegen. Die Mittel enthalten - neben gegebenenfalls weiteren gefrierpunktserniedrigenden Komponenten - wasserlösliche Salze von einer oder mehreren Dicarbonsäuren mit mindestens drei Kohlenstoffatomen, z.B. Mischungen aus Adipin-, Glutar- und Bernsteinsäuresalzen. Die Formulierungen sollen teilweise auch für die Übertragung von Wärme und Kälte in beispielsweise Kühlern, Radiatoren und Wärmeaustauschern in der Industrie, Gewerbe und Haushalt bei Temperaturen von -20 bis +100°C einsetzbar sein. Auch die in der EP-A 0 077 767 beschriebenen Dicarbonsäuresalze eignen sich in den Konzentrationsbereichen, die zum Erzielen einer ausreichenden Gefrierschutzwirkung notwendig sind, allgemein wegen des korrosiven Effekts nicht zur Verwendung in Kühlmitteln oder Gefrierschutzmitteln.

SU 1726 489 offenbart ein wässriges Kühlmittel, das 10 bis 50 Gew.-% eines Salzes einer gesättigten aliphatischen Dicarbonsäure in Form des Alkalimetallsalzes und weitere korrisionsinhibierende Substanzen enthält.

EP 1 170 347 offenbart ein Kühlmitteladditiv, das in Form eines Feststoffs, einer Paste oder einer Flüssigkeit als Konzentrat vorliegt und dem Kühlsystem einer Maschine hinzugefügt werden kann. Das Additiv enthält eine oder mehrere Dicarbonsäuren und weitere korrisionsinhibierende Substanzen sowie weiterhin ein anorganisches Salz. Die Dicarbonsäure kann in Mengen von 0,1 bis 10 Ges.-% vorliegen.

GB 1 004 259 offenbart eine korrisionsinhibierende Zusammensetzung enthaltend ein Salz einer gesättigten Dicarbonsäure von 6 bis 30 Kohlenstoffatomen und weitere korrisionsinhibierende Substanzen. Die Konzentration des Dicarbonsäure-Salzes ist mit 0,1 bis 5 Ges.-% angegeben

Bis jetzt konnte sich, trotz häufig besserer Wärmeübertragungseigenschaften, in der Praxis kein glykolfreies Kühlmittel bzw. Gefrierschutzmittel durchsetzen. Dies liegt insbesondere an dem mangelnden Korrosionsschutz, insbesondere auch bei modernen Motoren, trotz ansonsten zufriedenstellender Eigenschaften bezüglich Gefrierpunkterniedrigung. Beispielsweise sind die häufig vorgeschlagenen Formiate und Acetate in der Praxis durchaus sehr korrosiv. Es besteht also Bedarf an einem glykolfreien Kühlmittel mit zumindest gleich gutem Korrosionsschutz wie bei bekannten, glykolhaltigen Formulierungen.

Die Aufgabe der vorliegenden Erfindung besteht darin, derartige Gefrierschutzmittel/Kühlmittel bereitzustellen, welche die Nachteile des Standes der Technik nicht aufweisen. Diese Mischungen sollen ein ausgewogenes Verhältnis der Eigenschaften Korrosionsschutz, Wärmeübertragung und Frostbeständigkeit aufweisen. Insbesondere soll eine gegenüber den bisher bekannten glykolhaltigen Gefrierschutzmitteln verbesserte Wärmeleitfähigkeit resultieren.

Diese Aufgabe wird gelöst durch ein wässriges Gefrierschutzmittel enthaltend 10 bis 50 Gew.-% einer oder mehrerer Salze aus der Gruppe der gesättigten und ungesättigten, aliphatischen und aromatischen Dicarbonsäuren in Form des Alkalimetall-, Ammonium-oder Erdalkalimetallsalzes, enthaltend weiterhin a) 0,01 bis 5 Gew.-% einer oder mehrerer Verbindungen aus der Gruppe der aliphatischen Monocarbonsäuren mit 3 bis 16 C-Atomen in Form von deren Alkalimetall-, Ammonium-und substituierten Ammoniumsalzen.

Diese Aufgabe wird weiterhin gelöst durch die Verwendung von 10 bis 50 Gew.-% eines oder mehrere Salze einer Dicarbonsäure aus der Gruppe der gesättigten und ungesättigten, aliphatischen und aromatischen Dicarbonsäuren in Form des Alkalimetall-, Ammonium-oder Erdalkalimetallsalzes, sowie mit a) 0,01 bis 5 Gew.-% einer oder mehrerer Verbindungen aus der Gruppe der aliphatischen Monocarbonsäuren mit 3 bis 16 C-Atomen in Form von deren Alkalimetall-, Ammonium- und substituierten Ammoniumsalzen, als Gefrierschutzmittel.

Die genannte Verwendung ist insbesondere vorteilhaft in Kühlflüssigkeiten, Wärmeträgerflüssigkeiten oder Kühlsolen.

Durch die Kombination üblicher korrosionsinhibierender Mittel mit ansonsten in höheren Konzentrationen sehr korrosionswirkenden Dicarbonsäuresalzen wird überraschenderweise deren korrosive Wirkung unterdrückt. In dieser Kombination eignen sich Dicarbonsäuresalze somit als Gefrierschutzmittel. Derart wird in den erfindungsgemäßen Gefrierschutzmitteln nicht nur ein guter Gefrierschutz mit einem Eisflockenpunkt gemäß ASTM D 1177 von unter -30°C, sondern auch eine ausgezeichnete Wärmeleitfähigkeit verbunden mit einem sehr guten Korrosionsschutz erreicht.

Beispiele von aromatischen Dicarbonsäuren umfassen Phthalsäure und Terephthalsäure.

Vorzugsweise werden die Salze von unverzweigten oder verzweigten, gesättigten oder ungesättigten aliphatischen Dicarbonsäuren mit 2 bis 15 C-Atomen oder Mischungen davon eingesetzt. Erfindungsgemäß geeignete Säure dieser Klasse umfassen Oxalsäure, Malonsäure, Bernsteinsäure, Glutarsäure, Adipinsäure, Pimelinsäure, Korksäure, Azelainsäure, Sebacinsäure, Undecandisäure, Dodecandisäure, Maleinsäure, Fumarsäure, Sorbinsäure. Auch technisch anfallende Mischungen von Carbonsäuren, wie sie z.B. unter der Bezeichnung Sokalan^{®} DCS (C₄-C₆-Dicarbonsäuren) von der BASF AG vermarktet werden, können erfindungsgemäß eingesetzt werden.

Insbesondere werden lineare gesättigte, aliphatische Dicarbonsäuren mit 4 bis 12 C-Atomen oder Mischungen davon eingesetzt, davon beispielsweise Sokalan^{®} DCS. Der Einsatz von Salzen der Adipinsäure ist meist bevorzugt.

Alle vorstehend genannten Carbonsäuren liegen in den erfindungsgemäßen Gefrierschulmitteln als Alkalimetallsalz, vorzugsweise als Natrium- oder Kaliumsalz, oder als Ammoniumsalz oder substituiertes Ammoniumsalz vor, beispielsweise von Ammoniak, Trialkylaminen oder Trialkanolaminen. Die Salze liegen in der Regel als die Bissalze vor, können aber auch in Form von Monosalzen der Dicarbonsäuren oder als Mischungen von Bis- und Monosalzen vorliegen.

In einer bevorzugten Ausführungsform der vorliegenden Erfindung werden als korrosionsinhibierende Substanz eine oder mehrere Verbindungen aus den nachfolgend aufgeführten Gruppen eingesetzt.
b) 0,01 bis 5 Gew.-% einer oder mehrerer Verbindungen aus der Gruppe der aliphatischen und aromatischen Di- und Tricarbonsäuren mit jeweils 3 bis 21 C-Atomen in Form von deren Alkalimetall-, Ammonium- und substituierten Ammoniumsalzen, wobei im Fall des Einsatzes einer Dicarbonsäure diese von der erfindungsgemäß als Gefrierschutzmittel eingesetzten Dicarbonsäure verschieden ist;
c) 0 bis 1 Gew.-% einer oder mehrerer Verbindungen aus der Gruppe der Alkalimetallborate, Alkalimetallphosphate, Alkalimetallsilikate, Alkalimetallnitrite, Alkali- und Erdalkalinitrate, Molybdate und Alkali- und Erdalkalifluoride;
d) 0 bis 1 Ges.-% einer oder mehrerer Verbindungen aus der Gruppe der Hartwasserstabilisatoren auf der Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und Copolymeren aus ungesättigten Carbonsäuren und Olefinen;
e) 0,01 bis 5 Gew.-% einer oder mehrerer Verbindungen aus der Gruppe der Carbonsäureamide und Sulfonsäureamide;
f) 0,01 bis 5 Gew.-% einer oder mehrerer Verbindungen aus der Gruppe der ein- und zweikernigen ungesättigten und teil-ungesättigten Heterocyclen mit 4 bis 10 C-Atomen, die benzanelliert sein und zusätzliche funktionelle Gruppen tragen können,
g) 0,01 bis 5 Gew.-% einer oder mehrerer Verbindungen aus der Gruppe der Tetra-(C₁-C₈-alkoxy)-silane (Orthokieselsäure-tetra-C₁-C₈-alkylester);
h) 0,01 bis 5 Gew.-% einer oder mehrerer Verbindungen aus der Gruppe der aliphatischen, cycloaliphatischen und aromatischen Amine mit 2 bis 15 C-Atomen, die zusätzlich Ethersauerstoffatome und Hydroxylgruppen enthalten können.

Es können aus den vorstehend aufgeführten Substanzgruppen a) bis h) jeweils eine oder mehrere Verbindungen eingesetzt werden. Die zusätzlich eingesetzten Substanzen können aus einer einzigen oder mehrerer der Substanzgruppen a) bis h) stammen.

Beispiele für lineare, verzweigte und cyclische aliphatische Monocarbonsäuren der Gruppe a) umfassen Propionsäure, Pentansäure, Hexansäure, Cyclohexylessigsäure, Octansäure, 2-Ethylhexansäure, Nonansäure, Isononansäure, Decansäure, Undecansäure und Dodecansäure.

Beispiele für aromatische Carbonsäuren der Gruppe a) umfassen Benzoesäure und substituierte Benzoesäure. Beispiele dafür umfassen C₁- bis C₈-Alkylbenzoesäure, insbesondere o-, m- und p-Methylbenzoesäure und p-tert-Butylbenzoesäure sowie hydroxylgruppenhaltige aromatische Monocarbonsäuren, insbesondere o-, m- und p-Hydroxybenzoesäure und o-, m- und p-(Hydroxymethyl)benzoesäure und Halogenbenzoesäuren, insbesondere o-, m- und p-Fluorbenzoesäure und mit Nitrogruppen substituierte Benzoesäure, insbesondere o-, m- und p-Nitrobenzoesäure. Der Einsatz unsubstituierter Benzoesäure ist bevorzugt.

Beispiele für Di- und Tricarbonsäuren der Gruppe b) umfassen Malonsäure, Bernsteinsäure, Glutarsäure, Adipinsäure, Pimelinsäure, Korksäure, Azelainsäure, Sebacinsäure, Undecandisäure, Dodecandisäure, Dicyclopentadiendicarbonsäure, Phthalsäure, Terephthalsäure und Triazin-triiminocarbonsäuren, beispielsweise 6, 6', 6"-(1,3,5-Triazin-2,4,6-triyltrümino)-trihexansäure.

Die vorstehend unter a) und b) genannten Carbonsäuren liegen als Alkalimetallsalze, vorzugsweise als Natrium- oder Kaliumsalze, oder Ammoniumsalze oder substituierte Ammoniumsalze (Aminsalze) vor, beispielsweise von Ammoniak, Trialkylaminen oder Alkanolaminen. Auch entsprechende Imide der Dicarbonsäuren können zum Einsatz kommen.

Beispiele für unter c) genannte Verbindungen sind Natriumtetraborat (Borax), Dinatriumhydrogenphosphat, Trinatriumphosphat, Natriummetasilikat, Natriumnitrit, Natriumnitrat, Magnesiumnitrat, Natriumfluorid, Kaliumfluorid, Magnesiumfluorid und Natriummolybdat. Die genannten Verbindungen weisen korrosionsinhibierende Eigenschaften auf. Bei Mitverwendung von Alkalimetallsilikaten werden diese zweckmäßigerweise durch übliche Organosilikophosphonate oder Organosilikosulfonate in üblichen Mengen stabilisiert.

Zusätzlich zu den genannten Inhibitorkomponenten können beispielsweise auch noch Additive, beispielsweise lösliche Salze des Magnesiums von organischen Säuren, beispielsweise Magnesiumbenzolsulfonat, Magnesiummethansulfonat, Magnesiumacetat oder Magnesiumpropionat, Hydrocarbazole oder quaternierte Imidazole, wie sie in der DE-A 196 05 509 beschrieben werden, in üblichen Mengen eingesetzt werden. Auch Sulfite, wie sie in der EP-A 1007 600 offenbart sind, können eingesetzt werden.

Beispiele für Carbonsäure- und Sulfonsäureamide der Gruppe e) umfassen aliphatische, cycloaliphatische, aromatische und heteroaromatische Carbonsäureamide und Sulfonsäureamide mit jeweils 2 bis 16 C-Atomen, vorzugsweise mit jeweils 3 bis 12 C-Atomen.

Beispiele für die vorstehend genannten Carbonsäure- und Sulfonsäureamide sind nachfolgend aufgeführt:

Benzamid, 2-Methylbenzamid, 3-Methylbenzamid, 4-Methylbenzamid, 2,4-Dimethylbenzamid, 4-tert.-Butylbenzamid, 3-Methoxybenzamid, 4-Methoxybenzamid, 2-Aminobenzamid (Anthrahilsäureamid), 3-Aminobenzamid, 4-Aminobenzamid, 3-Amino-4-methylbenzamid, 2-Chlorbenzamid, 3-Chlorbenzamid, 4-Chlorbenzamid, 2-Fluorbenzamid, 3-Fluorbenzamid, 4-Fluorbenzamid, 2,6-Difluorbenzamid, 4-Hydroxybenzamid, 2-Hydroxybenzamid, (Salicylsäureamid), Phthalsäurediamid, Terephthalsäurediamid, Nicotinsäureamid (Pyridin-3-carbonsäureamid), Picolinsäureamid (Pyridin-2-carbonsäureamid), Bernsteinsäurediamid, Adipinsäurediamid, Propionsäureamid, Hexansäureamid, 2-Pyrrolidon, N-Methyl-2-pyrrolidon, 2-Piperidon, ε-Caprolactam, Benzolsulfonsäureamid, o-Toluolsulfonsäureamid, m-Toluolsulfonsäureamid, p-Toluolsulfonsäureamid, 4-tert.-Butylbenzolsulfonsäureamid, 4-Fluorbenzolsulfonsäureamid, 4-Hydroxybenzolsulfonsäureamid, 2-Aminobenzolsulfonsäureamid, 3-Aminobenzolsulfonsäureamid, 4-Aminobenzolsulfonsäureamid, 4-Acetylbenzolsulfonsäureamid.

Die Amide der Gruppe e) können gegebenenfalls am Stickstoffatom der Amidgruppe alkylsubstituiert sein, beispielsweise durch eine C₁-C₄-Alkylgruppe. Aromatische oder heteroaromatische Grundgerüste des Moleküls können selbstverständlich auch derartige Alkylgruppen tragen. Im Molekül können eine oder mehrere, vorzugsweise ein oder zwei, Amidgruppen vorliegen. Die Amide können zusätzlich funktionelle Gruppen aufweisen, vorzugsweise aus der Gruppe C₁-C₄-Alkoxy, Amino, Chlor, Fluor, Hydroxy und Acetyl. Die vorstehend genannten funktionellen Gruppen liegen insbesondere als Substituenten an verschiedenen aromatischen und heteroaromatischen Ringen vor.

Beispiele für Heterocyclen der Gruppe f) umfassen einkernige fünf- und sechsgliedrige Systeme mit 1, 2 oder 3 Stickstoffatomen oder mit einem Stickstoffatom und einem Schwefelatom, wobei die genannten Systeme benzanelliert sein können. Es können auch zweikernige Systeme aus fünf- oder sechsgliedrigen Teilringen mit typischerweise 2, 3 oder 4 Stickstoffatomen eingesetzt werden. Die Heterocyclen f) können zusätzliche funktionelle Gruppen tragen, vorzugsweise aus der Gruppe bestehend C₁-C₄-Alkoxy, Amino- und Mercapto. Das heterocyclische Grundgerüst kann selbstverständlich mit Alkylgruppen substituiert sein.

Bevorzugte Heterocyclen f) umfassen Benzotriazol, Tolutriazol, hydriertes Tolutriazol, 1H-1,2,4-Triazol, Benzimidazol, Benzthiazol, Adenin, Purin, 6-Methoxypurin, Indol, Isoindol, Isoindolin, Pyridin, Pyrimidin, 3,4-Diaminopyridin, 2-Aminopyrimidin und 2-Mercaptopyrimidin.

Beispiele für Tetra-(C₁-C₈-alkoxy)silane der Gruppe g) umfassen Tetramethoxysilan, Tetraethoxysilan, Tetra-n-propoxysilan oder Tetra-n-butoxysilan.

Beispiele für aliphatische, cycloaliphatische und aromatische Amine der Gruppe h) mit 2 bis 15 C-Atomen, die zusätzlich Ethersauerstoffatome oder Hydroxylgruppen enthalten können, umfassen Ethylamin, Propylamin, Isopropylamin, n-Butylamin, Isobutylamin, sec.-Butylamin, tert.-Butylamin, n-Pentylamin, n-Hexylamin, n-Heptylamin, n-Octylamin, Isononylamin, Di-n-propylamin, Diisopropylamin, Di-n-butylamin, Mono-, Di- und Triethanolamin, Piperidin, Morpholin, Anilin und Benzylamin. Aliphatische und cycloaliphatische Amine h) sind vorzugsweise gesättigt. Bevorzugt ist der Einsatz von Aminen mit 4 bis 8 C-Atomen.

Der pH-Wert der erfindungsgemäßen Gefrierschutzmittel liegt üblicherweise im Bereich von 6 bis 11, vorzugsweise 6 bis 10, insbesondere 7 bis 9,5. Dabei kann der gewünschte pH-Wert gegebenenfalls auch durch Zugabe von Alkalimetallhydroxid, Ammoniak oder Aminen zur Formulierung eingestellt werden, festes Natrium- oder Kaliumhydroxid sowie wässrige Natron- oder Kalilauge sind hierfür besonders geeignet. Mitzuverwendende Carbonsäuren werden zweckmäßigerweise gleich als entsprechende Alkalimetallsalze zugegeben, um automatisch im gewünschten pH-Bereich zu liegen. Man kann die Carbonsäuren jedoch auch als freie Säuren zufügen und dann mit Alkalimetallhydroxid, Ammoniak oder Aminen neutralisieren und den gewünschten pH-Bereich einstellen.

Generell enthalten die erfindungsgemäßen Gefrierschutzmittel kein Glykol.

In einer Ausführungsform können die erfindungsgemäßen wässrigen Gefrierschutzmittel auch noch geringe Mengen, insbesondere weniger als 10 Gew.-% Ethylenglykol oder Propylenglykol oder Mischungen von Alkylenglykolen oder von Glycerin mit Ethylenglykol bzw. Propylenglykol, enthalten. Unter "Propylenglykol" wird im Rahmen der vorliegenden Erfindung sowohl 1,2- als auch 1,3-Propylenglykol verstanden.

In einer weiteren Ausführungsform können die erfindungsgemäßen wässrigen Gefrierschutzmittel auch noch geringe Mengen, weniger als 10 Gew.-% und insbesondere weniger als 5,5 Gew.-% Polyethylenglykole und/oder Polypropylenglykole mit 2 bis 15 Glykolethereinheiten enthalten wie zum Beispiel Diethylenglykol, Triethylenglykol, Tetraethylenglykol, Dipropylenglykol, Tripropylenglykol und Tetrapropylenglykol. Auch entsprechende wasserlösliche Alkylenglykol- oder Polyalkylenglykolether können in den genannten Mengen enthalten sein, wie zum Beispiel Triethylenglykolmonomethylether.

Als weitere übliche Hilfsmittel können die erfindungsgemäßen Gefrierschutzmittel in üblichen geringen Mengen noch Entschäumer, in der Regel in Mengen von 0,001 bis 0,010 Gew.-%, einzelne oder mehrere Farbstoffe sowie Bitterstoffe aus Gründen der Hygiene und der Sicherheit im Fall eines Verschluckens enthalten. Ein Beispiel für einen geeigneten Bitterstoff ist Denatoniumbenzoat. Die erwähnten Farbstoffe sind vorzugsweise ausgewählt aus der Gruppe bestehend aus C.I. Direct Blue 199. (C.I. 74190), C.I. Direct Blue 86 (C.I. 74180), C.I. Acid Green 25 (C.I. 61570), C.I. Acid Yellow 73 (C.I. 45350), C.I. Reactive Violet 5 (C.I. 18097) und Uranin (Natriumfluoreszein) und Mischungen davon.

Die erfindungsgemäßen Formulierungen können weiterhin zusätzlich eine oder mehrere anorganische oder organische gefrierpunktserniedrigende Substanzen, beispielsweise Formiate, Acetate und/oder Propionate enthalten, wie sie aus dem Stand der Technik bekannt sind. Prinzipiell sind auch Abmischungen mit glykolfreien und glykol- oder glycerinhaltigen Kühlerschutzmitteln möglich.

Die erfindungsgemäßen wässrigen Gefrierschutzmittel weisen vor allem eine deutlich bessere Korrosionsinhibierung gegenüber den Mitteln auf, die aus dem Stand der Technik bekannt sind. Diese Wirkung ist bei der Kombination der erfindungsgemäß eingesetzten Dicarbonsäuresalze mit einer oder mehreren Substanzen aus den Gruppen a) bis h) besonders gut. Noch mehr bevorzugt ist die Kombination von einer oder mehrerer Substanzen aus den Gruppen a), b), c) , d) und/oder f). Insbesondere bevorzugt ist die Verwendung von Salzen von 2-Ethylhexansäure, p-Hydroxybenzoesäure, Benzoesäure, Isononansäure, Sebacinsäure und Dodecandicarbonsäure sowie von Tolutriazol, Benzotriazol, 1H-1,2,4-Triazol, Natriummolybdat und Natriummetasilikat.

Die wässrigen Lösungen auf Basis von Dicarbonsäuresalzen eignen sich zur Verwendung als Kühlerschutzmittel für Verbrennungsmotoren, beispielsweise in Kraftfahrzeugen oder Schiffen. Weiterhin eignen sie sich als Wärmeträgerflüssigkeiten, beispielsweise zum Betrieb von Solaranlagen, zum Beispiel von privaten oder öffentlichen Gebäuden zur Heisswassergewinnung oder als Kühlsolen, beispielsweise in stationären Kühlanlagen, wie zum Beispiel in Kühl- oder Gefrierhäusern zur Lagerung von Lebensmitteln, wobei der Einsatz als Kühlerschutzmittel für Verbrennungsmotoren bevorzugt ist.

Die nachfolgenden Beispiele sollen die Erfindung erläutern, ohne sie zu beschränken.

### Beispiele

Die erfindungsgemäßen neuen wässrigen Kühlerschutzmittel können prinzipiell durch einfaches Mischen und Lösen der Einsatzstoffe in Wasser hergestellt werden, was nachstehend exemplarisch für Beispiel 1 beschrieben ist:

### Beispiel 1 (Mengenverhältnisse der Einsatzstoffe gemäß Tabelle 1):

Destilliertes Wasser wird zuerst mit Adipinsäure versetzt und durch Zugabe von 50 %-iger KOH unter Rühren gelöst. Zu dieser Lösung wird dann eine zweite Lösung gegeben, die zuvor aus destilliertem Wasser, 50 %-iger KOH, Dodecandicarbonsäure und einer Natriummetasilikat x 5 H₂O/Natriumsilikophosphonat-Mischung hergestellt wurde. Dazu gibt man dann noch 2-Ethylhexansäure, 4-Hydroxybenzoesäure, Benzotriazol und Tolutriazol und erhält eine klare Lösung mit einem pH-Wert von 9.

In Tabelle 1 sind die Einsatzstoffe der erfindungsgemäßen Beispiele 1 bis 4 aufgeführt.

**Tabelle 1:**

| **Einsatzstoffe [Gew.-%]:** | **Beispiel 1** | **Beispiel 2** | **Beispiel 3** | **Beispiel 4** | **Beispiel 5** |
|---|---|---|---|---|---|
| Adipinsäure | 27,45 | 24,00 | 24,00 | | 27,45 |
| Sokalan® DCS | | | | 27,00 | |
| H₂O | 27,06 | 26,14 | 33,19 | 28,46 | 23,56 |
| KOH, 50 %-ig in H₂O | 44,44 | 41,74 | 39,00 | 43,04 | 44,44 |
| Tripropylenglykol | | | | | 3,50 |
| 2-Ethvlhexansäure | 0,58 | 3,50 | 1,00 | 0,58 | 0,58 |
| p-Hydroxybenzoesäure | 0,21 | | | | 0,21 |
| Benzoesäure | | | | 0,21 | |
| Dodecandicarbonsäure | 0,03 | | | 0,03 | 0,03 |
| Tolutriazol | 0,05 | 2,42 | 0,50 | 0,50 | 0,05 |
| Benzotriazol | 0,05 | | | 0,05 | 0,05 |
| Natriummolybdat x 2 H₂O | | 2,20 | 2,20 | | |
| Natriummetasilikat x 5 H₂O | 0,11 | | 0,10 | 0,11 | 0,11 |
| Natriumsilikophosphonat | 0,02 | | 0,01 | 0,02 | 0,02 |

Die Tabellen 2 und 3 zeigen Korrosionsergebnisse der erfindungsgemäßen Formulierungen und der Vergleichsbeispiele 1 und 2 im Glassware Corrosion Test gemäß ASTM D 1384-97 und im Statischen Heißkorrosionstest gemäß ASTM D 4340.

Wie man sieht, erreicht man mit den neuen, erfindungsgemäßen wässrigen Kühlerschutzmitteln bei sehr gutem Gefrierschutz (Eisflockenpunkte siehe Tabelle 2) auch einen hervorragend guten Korrosionsschutz bei den unterschiedlichsten Metalllegierungen, der insgesamt deutlich besser ist als der bisherige Stand der Technik bei glykolfreien Kühlmitteln.

**Tabelle 2:**

| **Glassware Corrosion Test gemäß ASTM D 1384.97** | | | | | | | |
|---|---|---|---|---|---|---|---|
| Geprüfte Kühlerschutzmittel (Konzentration: 100 Vol.-%): | | | | | | | |
| | **Beisp.1** | **Beisp.2** | **Beisp.3** | **Beisp.4** | **Beisp.5** | **Vergleich 1(**WO 01/05906**, Beisp. 2)** | **Vergleich 2(**EP 0 077 767**, Beisp.1)** |
| **Eisflockenpunkte [°C] gem. ASTM D 1177:** | -37 | -35 | -30 | < - 35 | < - 35 | -25 bis -34 | < -35 |
| **Gewichtsänderungen: Prüfkörper** | **[mg/ cm²]** | **[mg/cm²]** | **[mg/ cm²]** | **[mg/ cm²]** | **[mg/cm²]** | **[mg/cm²]** | **[mg/cm²]** |
| Kupfer | - 0,09 | - 0,15 | 0,01 | - 0,12 | - 0,04 | - 0,16 | + 0,15 |
| Weichlot | 0,03 | 0,01 | 0,02 | - 0,23 | - 0,06 | - 4,89 | - 25,37 |
| Messing | - 0,06 | - 0,32 | 0,03 | - 0,11 | 0,02 | - 0,17 | + 0,14 |
| Stahl | 0,02 | 0,02 | 0,00 | 0,00 | 0,02 | 0,01 | - 1,18 |
| Grauguss | 0,04 | 0,02 | 0,06 | 0,02 | - 0,01 | - 4,18 | - 35,30 |
| Gussaluminium | 0,02 | 0,05 | - 0,03 | - 0,01 | 0,00 | - 0,19 | - 0,69 |
| | | | | | | | |
| **Aussehen Kühl- mittel nach Test:** | **klar** | **Klar** | **klar** | **klar** | **klar** | **Trüb** | **stark braune Ausfällungen** |

**Tabelle 3**

| **Statischer Heißkorrosionstest gemäß ASTM D 4340-98** | | | |
|---|---|---|---|
| Geprüfte Kühlerschutzmittel (Konzentration: 100 Vol.-%): | | | |
| | **Beispiel 1** | **Beispiel 2** | **Beispiel 5** |
| **Gewichtsänderungen: Prüfkörper:** | **(mg/cm²/Woche]** | **(mg/cm²/Woche]** | **[mg/cm²/Woche]** |
| **Gussaluminium** | **- 0,28** | **- 0,19** | **- 0,13** |

## Patentansprüche

1. Wässriges Gefrierschutzmittel enthaltend 10 bis 50 Gew.-% eines oder mehrerer Salze aus der Gruppe der gesättigten und ungesättigten, aliphatischen und aromatischen Dicarbonsäuren in Form des Alkalimetall-, Ammonium- oder Erdalkalimetallsalzes, enthaltend weiterhin
a) 0,01 bis 5 Gew.-% einer oder mehrerer Verbindungen aus der Gruppe der aliphatischen Monocarbonsäuren mit 3 bis 16 C-Atomen in Form von deren Alkalimetall-, Ammonium- und substituierten Ammoniumsalzen.

2. Gefrierschutzmittel nach Anspruch 1, **dadurch gekennzeichnet, dass** Salze von unverzweigten oder verzweigten, gesättigten oder ungesättigten, aliphatischen Dicarbonsäuren mit 2 bis 15 C-Atomen oder Mischungen davon eingesetzt werden.

3. Gefrierschutzmittel nach Anspruch 2, **dadurch gekennzeichnet, dass** die Dicarbonsäure eine lineare gesättigte aliphatische Dicarbonsäure mit 4 bis 12 C-Atomen ist, insbesondere Adipinsäure, ist.

4. Gefrierschutzmittel nach einem der Ansprüche 1 bis 3, **dadurch gekennzeichnet, dass** das Salz ein Natrium- oder Kaliumsalz, ein Ammoniak-, Trialkylamin- oder Trialkanolaminsalz ist.

5. Gefrierschutzmittel nach einem der Ansprüche 1 bis 4, **dadurch gekennzeichnet, dass** zusätzlich eine oder mehrere Verbindungen aus den nachfolgend aufgeführten Gruppen eingesetzt werden:
b) 0,01 bis 5 Gew.-% einer oder mehrerer Verbindungen aus der Gruppe der aliphatischen und aromatischen Di- und Tricarbonsäuren mit jeweils 3 bis 21 C-Atomen in Form von deren Alkalimetall-, Ammonium- und substituierten Ammoniumsalzen, wobei im Fall des Einsatzes einer Dicarbonsäure diese von der als Gefrierschutzmittel eingesetzten Dicarbonsäure verschieden ist;
c) 0 bis 1 Gew.-% einer oder mehrerer Verbindungen aus der Gruppe der Alkalimetallborate, Alkalimetallphosphate, Alkalimetallsilikate, Alkalimetallnitrite, Alkali- und Erdalkalinitrate, Molybdate und Alkali- und Erdalkalifluoride;
d) 0 bis 1 Gew.-% einer oder mehrerer Verbindungen aus der Gruppe der Hartwasserstabilisatoren auf der Basis von Polyacrylsäure, Polymaleinsäure, Acrylsäure-Maleinsäure-Copolymeren, Polyvinylpyrrolidon, Polyvinylimi-dazol, Vinylpyrrolidon-Vinylimidazol-Copolymeren und Copolymeren aus ungesättigten Carbonsäuren und Olefinen;
e) 0,01 bis 5 Gew.-% einer oder mehrerer Verbindungen aus der Gruppe der Carbonsäureamide und Sulfonsäureamide;
f) 0,01 bis 5 Gew.-% einer oder mehrerer Verbindungen aus der Gruppe der ein- und zweikernigen ungesättigten und teil-ungesättigten Heterocyclen mit 4 bis 10 C-Atomen, die benzanilliert sein oder zusätzliche funktionelle Gruppen tragen können,
g) 0,01 bis 5 Gew.-% einer oder mehrerer Verbindungen aus der Gruppe der Tetra-(C₁-C₈-alkoxy)-silane (Orthokieselsäure-tetra-C₁-C₈-alkylester);
h) 0,01 bis 5 Gew.-% einer oder mehrerer Verbindungen aus der Gruppe der aliphatischen, cycloaliphatischen und aromatischen Amine mit 2 bis 15 C-Atomen, die zusätzlich Ethersauerstoffatome oder Hydroxylgruppen enthalten können.

6. Gefrierschutzmittel nach Anspruch 5, **dadurch gekennzeichnet, dass** die Kombination von einer oder mehrerer Substanzen aus den Gruppen a), b), c) d) und/oder f) enthalten ist.

7. Gefrierschutzmittel nach einem der Ansprüche 1 bis 6, **dadurch gekennzeichnet, dass** insbesondere Salze von 2-Ethylhexansäure, p-Hydroxybenzoesäure, Benzoesäure, Isononansäure, Sebacinsäure und Dodecandicarbonsäure sowie Tolutriazol, Benzotriazol, 1H-1,2,4-Triazol, Natriummolybdat und Natriummetasilikat verwendet werden.

8. Gefrierschutzmittel nach einem der Ansprüche 1 bis 7, **dadurch gekennzeichnet, dass** deren pH-Wert im Bereich von 6 bis 11, vorzugsweise 6 bis 10, insbesondere 7 bis 9,5 liegt.

9. Gefrierschutzmittel nach einem der Ansprüche 1 bis 8, **dadurch gekennzeichnet, dass** sie weniger als 10 Gew.-% und insbesondere weniger als 5,5 Gew.-% Ethylenglykol, Propylenglykol, Polyethylenglykole und/oder Polypropylenglykole mit 2 bis 15 Glykolethereinheiten enthalten.

10. Verwendung von 10 bis 50 Gew.-% einer oder mehrerer Salze einer Dicarbonsäure aus der Gruppe der gesättigten und ungesättigten, aliphatischen und aromatischen Dicarbonsäuren in Form des Alkalimetall-, Ammonium- oder Erdalkalimetallsalzes, sowie mit
a) 0,01 bis 5 Gew.-% einer oder mehrerer Verbindungen aus der Gruppe der aliphatischen Monocarbonsäuren mit 3 bis 16 C-Atomen in Form von deren Alkalimetall-, Ammonium- und substituierten Ammoniumsalzen als Gefrierschutzmittel.

11. Verwendung nach Anspruch 10, in Gefrierschutzmitteln, Kühlflüssigkeiten, Wärmeträgerflüssigkeiten oder Kühlsolen.

12. Verwendung nach Anspruch 10 oder 11, **dadurch gekennzeichnet, dass** Salze von verzweigten oder unverzweigten, gesättigten oder ungesättigten, aliphatischen Dicarbonsäuren mit 2 bis 15 C-Atomen oder Mischungen davon eingesetzt werden.

13. Verwendung nach Anspruch 12, **dadurch gekennzeichnet, dass** die Dicarbonsäure eine lineare gesättigte aliphatische Dicarbonsäure mit 4 bis 12 C-Atomen ist.

14. Verwendung nach einem der Ansprüche 10 bis 13, **dadurch gekennzeichnet, dass** zusätzlich eine oder mehrere Verbindungen aus den nachfolgend aufgeführten Gruppen eingesetzt werden:
b) 0,01 bis 5 Gew.-% einer oder mehrerer Verbindungen aus der Gruppe der aliphatischen und aromatischen Di- und Tricarbonsäuren mit jeweils 3 bis 21 C-Atomen in Form von deren Alkalimetall-, Ammonium- und substituierten Ammoniumsalzen, wobei im Fall des Einsatzes einer Dicarbonsäure diese von der als Gefrierschutzmittel eingesetzten Dicarbonsäure verschieden ist;
c) 0 bis 1 Gew.-% einer oder mehrerer Verbindungen aus der Gruppe der Alkalimetallborate, Alkalimetallphosphate, Alkalimetallsilikate, Alkalimetallnitrite, Alkali- und Erdalkalinitrate, Molybdate und Alkali- und Erdalkalifluoride;
d) 0 bis 1 Gew.-% einer oder mehrerer Verbindungen aus der Gruppe der Hartwasserstabilisatoren auf der Basis von Polyacrylsäure, Polymaleinsäure, Acrylsäure-Maleinsäure-Copolymeren, Polyvinylpyrrolidon, Polyvinylimi-dazol, Vinylpyrrolidon-Vinylimidazol-Copolymeren und Copolymeren aus ungesättigten Carbonsäuren und Olefinen;
e) 0,01 bis 5 Gew.-% einer oder mehrerer Verbindungen aus der Gruppe der Carbonsäureamide und Sulfonsäureamide;
f) 0,01 bis 5 Gew.% einer oder mehrerer Verbindungen aus der Gruppe der ein- und zweikernigen ungesättigten und teil-ungesättigten Heterocyclen mit 4 bis 10 C-Atomen, die benzanilliert sein oder zusätzliche funktionelle Gruppen tragen können,
g) 0,01 bis 5 Gew.-% einer oder mehrerer Verbindungen aus der Gruppe der Tetra-(C₁-C₈-alkoxy)-silane (Orthokieselsäure-tetra-C₁-C₈-alkylester);
h) 0,01 bis 5 Gew.-% einer oder mehrerer Verbindungen aus der Gruppe der aliphatischen, cycloaliphatischen und aromatischen Amine mit 2 bis 15 C-Atomen, die zusätzlich Ethersauerstoffatome oder Hydroxylgruppen enthalten können.

## Claims

1. An aqueous antifreeze composition comprising 10 to 50% by weight of one or more salts from the group of saturated and unsaturated, aliphatic and aromatic dicarboxylic acids in the form of the alkali metal, ammonium or alkaline earth metal salt, further comprising
a) 0.01 to 5% by weight of one more compounds from the group of aliphatic monocarboxylic acids having 3 to 16 carbon atoms in the form of their alkali metal, ammonium and substituted ammonium salts.

2. An antifreeze composition according to claim 1, wherein salts of unbranched or branched, saturated or unsaturated, aliphatic dicarboxylic acids having 2 to 15 carbon atoms or mixtures thereof are used.

3. An antifreeze composition according to claim 2, wherein the dicarboxylic acid is a linear saturated aliphatic dicarboxylic acid having 4 to 12 carbon atoms, in particular adipic acid.

4. An antifreeze composition according to any of claims 1 to 3, wherein the salt is a sodium or potassium salt, an ammonium, trialkylamine or trialkanolamine salt.

5. An antifreeze composition according to any of claims 1 to 4, wherein one or more compounds from the groups listed below are additionally used:
b) 0.01 to 5% by weight of one or more compounds from the group of aliphatic and aromatic di- and tricarboxylic acids each having 3 to 21 carbon atoms in the form of their alkali metal, ammonium and substituted ammonium salts, where, in cases where a dicarboxylic acid is used, this is different from the dicarboxylic acid used as antifreeze composition;
c) 0 to 1% by weight of one or more compounds from the group of alkali metal borates, alkali metal phosphates, alkali metal silicates, alkali metal nitrites, alkali metal and alkaline earth metal nitrates, molybdates and alkali metal and alkaline earth metal fluorides;
d) 0 to 1% by weight of one or more compounds from the group of hard-water stabilizers based on polyacrylic acid, polymaleic acid, acrylic acrid-maleic acid copolymers, polyvinylpyrrolidone, polyvinylimidazole, vinylpyrrolidone-vinylimidazole copolymers and copolymers of unsaturated carboxylic acids and olefins;
e) 0.01 to 5% by weight of one or more compounds from the group of carboxamides and sulfonamides;
f) 0.01 to 5% by weight of one or more compounds from the group of mono- and binuclear unsaturated and partially unsaturated heterocycles having 4 to 10 carbon atoms, which may be benzo-fused or carry additional functional groups,
g) 0.01 to 5% by weight of one or more compounds from the group of tetra(C₁-C₈-alkoxy)silanes (orthosilicic acid tetra-C₁-C₈-alkyl esters);
h) 0.01 to 5% by weight of one or more compounds from the group of aliphatic, cycloaliphatic and aromatic amines having 2 to 15 carbon atoms which may additionally comprise ther oxygen atoms or hydroxyl groups.

6. An antifreeze composition according to claim 5, wherein the combination of one or more substances from the groups a), b), c), d) and/or f) is present.

7. An antifreeze composition according to any of claims 1 to 6, wherein, in particular, salts of 2-ethylhexanoic acid, p-hydroxybenzoic acid, benzoic acid, isononanoic acid, sebacic acid and dodecanedicarboxylic acid and tolutriazole, benzotriazole, 1H-1,2,4-triazole, sodium molybdate and sodium metasilicate are used.

8. An antifreeze composition according to any of claims 1 to 7, wherein its pH is in the range from 6 to 11, preferably 6 to 10, in particular 7 to 9.5.

9. An antifreeze composition according to any of claims 1 to 8, which comprises less than 10% by weight and in particular less than 5.5% by weight of ethylene glycol, propylene glycol, polyethylene glycols and/or polypropylene glycols having 2 to 15 glycol ether units.

10. The use of 10 to 50% by weight of one or more salts of a dicarboxylic acid from the group of saturated and unsaturated, aliphatic and aromatic dicarboxylic acids in the form of the alkali metal, ammonium or alkaline earth metal salt, and also with
a) 0.01 to 5% by weight of one more compounds from the group of aliphatic monocarboxylic acids having 3 to 16 carbon atoms in the form of their alkali metal, ammonium and substituted ammonium salts as antifreeze composition.

11. The use according to claim 10, in antifreeze compositions, cooling liquids, heat-transfer liquids or cooling brines.

12. The use according to claim 10 or 11, wherein salts of branched or unbranched, saturated or unsaturated, aliphatic dicarboxylic acids having 2 to 15 carbon atoms or mixtures thereof are used.

13. The use according to claim 12, wherein the dicarboxylic acid is a linear saturated aliphatic dicarboxylic acid having 4 to 12 carbon atoms.

14. The use according to any of claims 10 to 13, wherein one or more compounds from the groups listed below are additionally used:
b) 0.01 to 5% by weight of one or more compounds from the group of aliphatic and aromatic di- and tricarboxylic acids each having 3 to 21 carbon atoms in the form of their alkali metal, ammonium and substituted ammonium salts, where, in cases where a dicarboxylic acid is used, this is different from the dicarboxylic acid used as antifreeze composition;
c) 0 to 1% by weight of one or more compounds from the group of alkali metal borates, alkali metal phosphates, alkali metal silicates, alkali metal nitrites, alkali metal and alkaline earth metal nitrates, molybdates and alkali metal and alkaline earth metal fluorides;
d) 0 to 1% by weight of one or more compounds from the group of hard-water stabilizers based on polyacrylic acid, polymaleic acid, acrylic acid-maleic acid copolymers, polyvinylpyrrolidone, polyvinylimidazole, vinylpyrrolidone-vinylimidazole copolymers and copolymers of unsaturated carboxylic acids and olefins;
e) 0.01 to 5% by weight of one or more compounds from the group of carboxamides and sulfonamides;
f) 0.01 to 5% by weight of one or more compounds from the group of mono- and binuclear unsaturated and partially unsaturated heterocycles having 4 to 10 carbon atoms, which may be benzo-fused or carry additional functional groups,
g) 0.01 to 5% by weight of one or more compounds from the group of tetra(C₁-C₈-alkoxy)silanes (orthosilicic acid tetra-C₁-C₈-alkyl esters);
h) 0.01 to 5% by weight of one or more compounds from the group of aliphatic, cycloaliphatic and aromatic amines having 2 to 15 carbon atoms which may additionally comprise ether oxygen atoms or hydroxyl groups.

## Revendications

1. Agent antigel aqueux contenant 10 à 50 % en poids d'un ou de plusieurs sels du groupe des acides dicarboxyliques saturés et insaturés, aliphatiques et aromatiques, sous la forme du sel de métal alcalin, d'ammonium ou de métal alcalino-terreux, contenant également
a) 0,01 à 5 % en poids d'un ou de plusieurs composés du groupe des acides monocarboxyliques aliphatiques de 3 à 16 atomes C sous la forme de leurs sels de métal alcalin, d'ammonium et d'ammonium substitué.

2. Agent antigel selon la revendication 1, **caractérisé en ce que** des sels d'acides dicarboxyliques aliphatiques, saturés ou insaturés, non ramifiés ou ramifiés, de 2 à 15 atomes C, ou leurs mélanges sont utilisés.

3. Agent antigel selon la revendication 2, **caractérisé en ce que** l'acide dicarboxylique est un acide dicarboxylique aliphatique saturé linéaire de 4 à 12 atomes C, notamment l'acide adipique.

4. Agent antigel selon l'une quelconque des revendications 1 à 3, **caractérisé en ce que** le sel est un sel de sodium ou de potassium, un sel d'ammoniac, de trialkylamine ou de trialcanolamine.

5. Agent antigel selon l'une quelconque des revendications 1 à 4, **caractérisé en ce qu'**un ou plusieurs composés des groupes listés ci-dessous sont également utilisés :
b) 0,01 à 5 % en poids d'un ou de plusieurs composés du groupe des acides di- et tricarboxyliques aliphatiques et aromatiques contenant chacun 3 à 21 atomes C sous la forme de leurs sels de métal alcalin, d'ammonium et d'ammonium substitué, dans le cas de l'utilisation d'un acide dicarboxylique, celui-ci étant différent de l'acide dicarboxylique utilisé en tant qu'agent antigel ;
c) 0 à 1 % en poids d'un ou de plusieurs composés du groupe des borates de métaux alcalins, phosphates de métaux alcalins, silicates de métaux alcalins, nitrites de métaux alcalins, nitrates de métaux alcalins et alcalino-terreux, molybdates et fluorures de métaux alcalins et alcalino-terreux ;
d) 0 à 1 % en poids d'un ou de plusieurs composés du groupe des stabilisateurs d'eau dure à base d'acide polyacrylique, d'acide polymaléique, de copolymères d'acide acrylique-acide maléique, de polyvinylpyrrolidone, de polyvinylimidazole, de copolymères de vinylpyrrolidone-vinylimidazole et de copolymères d'acides carboxyliques insaturés et d'oléfines ;
e) 0,01 à 5 % en poids d'un ou de plusieurs composés du groupe des amides d'acides carboxyliques et des amides d'acides sulfoniques ;
f) 0,01 à 5 % en poids d'un ou de plusieurs composés du groupe des hétérocycles mono- et binucléaires insaturés et partiellement insaturés de 4 à 10 atomes C, qui peuvent être benzannelés ou porter des groupes fonctionnels supplémentaires ;
g) 0,01 à 5 % en poids d'un ou de plusieurs composés du groupe des tétra-(alcoxy en C₁-C₈)-silanes (ester tétraalkylique en C₁-C₈ d'acide orthosilicique) ;
h) 0,01 à 5 % en poids d'un ou de plusieurs composés du groupe des amines aliphatiques, cycloaliphatiques et aromatiques de 2 à 15 atomes C, qui peuvent également contenir des atomes d'oxygène éthérés ou des groupes hydroxyle.

6. Agent antigel selon la revendication 5, **caractérisé en ce que** la combinaison d'une ou de plusieurs substances des groupes a), b), c), d) et/ou f) est contenue.

7. Agent antigel selon l'une quelconque des revendications 1 à 6, **caractérisé en ce que** des sels de l'acide 2-éthylhexanoïque, de l'acide p-hydroxybenzoïque, de l'acide benzoïque, de l'acide isononanoïque, de l'acide sébacique et de l'acide dodécanedicarboxylique, ainsi que de tolutriazole, de benzotriazole, de 1H-1,2,4-triazole, de molybdate de sodium et de métasilicate de sodium, sont notamment utilisés.

8. Agents antigels selon l'une quelconque des revendications 1 à 7, **caractérisés en ce que** leur valeur de pH se situe dans la plage allant de 6 à 11, de préférence de 6 à 10, notamment de 7 à 9,5.

9. Agents antigels selon l'une quelconque des revendications 1 à 8, **caractérisés en ce qu'**ils contiennent moins de 10 % en poids et notamment moins de 5,5 % en poids d'éthylène glycol, de propylène glycol, de polyéthylène glycols et/ou de polypropylène glycols contenant 2 à 15 unités éther de glycol.

10. Utilisation de 10 à 50 % en poids d'un ou de plusieurs sels d'un acide dicarboxylique du groupe des acides dicarboxyliques saturés et insaturés, aliphatiques et aromatiques, sous la forme du sel de métal alcalin, d'ammonium ou de métal alcalino-terreux, ainsi que de
a) 0,01 à 5 % en poids d'un ou de plusieurs composés du groupe des acides monocarboxyliques aliphatiques de 3 à 16 atomes C sous la forme de leurs sels de métal alcalin, d'ammonium et d'ammonium substitué, en tant qu'agent antigel.

11. Utilisation selon la revendication 10, dans des agents antigels, des liquides de refroidissement, des liquides caloporteurs ou des sols de refroidissement.

12. Utilisation selon la revendication 10 ou 11, **caractérisée en ce que** des sels d'acides dicarboxyliques aliphatiques, saturés ou insaturés, ramifiés ou non ramifiés, de 2 à 15 atomes C, ou leurs mélanges sont utilisés.

13. Utilisation selon la revendication 12, **caractérisée en ce que** l'acide dicarboxylique est un acide dicarboxylique aliphatique saturé linéaire de 4 à 12 atomes C.

14. Utilisation selon l'une quelconque des revendications 10 à 13, **caractérisée en ce qu'**un ou plusieurs composés des groupes listés ci-dessous sont également utilisés :
b) 0,01 à 5 % en poids d'un ou de plusieurs composés du groupe des acides di- et tricarboxyliques aliphatiques et aromatiques contenant chacun 3 à 21 atomes C sous la forme de leurs sels de métal alcalin, d'ammonium et d'ammonium substitué, dans le cas de l'utilisation d'un acide dicarboxylique, celui-ci étant différent de l'acide dicarboxylique utilisé en tant qu'agent antigel ;
c) 0 à 1 % en poids d'un ou de plusieurs composés du groupe des borates de métaux alcalins, phosphates de métaux alcalins, silicates de métaux alcalins, nitrites de métaux alcalins, nitrates de métaux alcalins et alcalino-terreux, molybdates et fluorures de métaux alcalins et alcalino-terreux ;
d) 0 à 1 % en poids d'un ou de plusieurs composés du groupe des stabilisateurs d'eau dure à base d'acide polyacrylique, d'acide polymaléique, de copolymères d'acide acrylique-acide maléique, de polyvinylpyrrolidone, de polyvinylimidazole, de copolymères de vinylpyrrolidone-vinylimidazole et de copolymères d'acides carboxyliques insaturés et d'oléfines ;
e) 0,01 à 5 % en poids d'un ou de plusieurs composés du groupe des amides d'acides carboxyliques et des amides d'acides sulfoniques ;
f) 0,01 à 5 % en poids d'un ou de plusieurs composés du groupe des hétérocycles mono- et binucléaires insaturés et partiellement insaturés de 4 à 10 atomes C, qui peuvent être benzannelés ou porter des groupes fonctionnels supplémentaires ;
g) 0,01 à 5 % en poids d'un ou de plusieurs composés du groupe des tétra- (alcoxy en C₁-C₈)-silanes (ester tétraalkylique en C₁-C₈ d'acide orthosilicique) ;
h) 0,01 à 5 % en poids d'un ou de plusieurs composés du groupe des amines aliphatiques, cycloaliphatiques et aromatiques de 2 à 15 atomes C, qui peuvent également contenir des atomes d'oxygène éthérés ou des groupes hydroxyle.
